Europäisches Patentamt

European Patent Office

Office européen des brevets

(19)

(11) **EP 1 441 211 A2**

(12) # EUROPEAN PATENT APPLICATION

(43) Date of publication:
**28.07.2004 Bulletin 2004/31**

(51) Int Cl.⁷: **G01M 11/08**

(21) Application number: **04001316.1**

(22) Date of filing: **22.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 KR 2003004581**

(71) Applicant: **Samsung Electronics Co., Ltd.**
**Suwon-si, Gyeonggi-do (KR)**

(72) Inventors:
• **Kim, Hyeon-Cheol c/o Samsung Electronics Co., Ltd.**
**Suwon-si, Gyeonggi (KR)**

• **Lee, Yeong Seop c/o Samsung Electronics Co., Ltd.**
**Suwon-si, Gyeonggi (KR)**
• **Ro, Sung-In c/o Samsung Electronics Co., Ltd.**
**Suwon-si, Gyeonggi (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Apparatus for measuring residual stress in optical fiber**

(57) An apparatus for measuring residual stress in an optical fiber is disclosed. The apparatus includes a light source for emitting a beam for use in measuring residual stress in an optical fiber, a polarimeter for polarizing the beam and converging the polarized beam to the optical fiber and a slide glass for supporting the optical fiber subject to measurement of its residual stress. The apparatus also includes an analyzer arranged in a position opposite to the slide glass for covering and supporting the optical fiber and for selectively passing a predetermined polarization component of the beam incident from the optical fiber and a detecting unit for visualizing the beam transmitted from the analyzer.

FIG.3

EP 1 441 211 A2

## Description

CLAIM OF PRIORITY

This application claims priority to an application entitled "Apparatus for measuring residual stress in an optical fiber" filed in the Korean Intellectual Property Office on January 23, 2003 and assigned Serial No. 2003-4581, the contents of which are hereby incorporated by reference.

BACKGROUND OF THE INVENTION

1. Field of the Invention

The present invention relates to an apparatus for measuring residual stress in an optical fiber, and in particular, to an apparatus which utilizes photoelasticity in measuring the residual stress in the optical fiber.

2. Description of the Related Art

In general, an optical fiber producing process produces stress in an optical fiber during hot drawing. Some of the stress remains within the completed optical fiber and is referred to as residual stress. This residual stress is responsible for not only increasing light loss within the optical fiber (i.e., light scattering), but also changing a refractive index that results from photoelastic effect. For this reason, a technique capable for precisely measuring and then optimally adjusting the distribution and magnitude of residual stress in the optical fiber is required.

Typically, the residual stress remaining in the optical fiber is measured based upon a photoelastic effect, which refers to a phenomenon by which a refractive index is changed along the direction of stress remaining in a transparent solid medium such as an optical fiber. The residual stress in the optical fiber shifts the phase of light or a beam incident into the optical fiber.

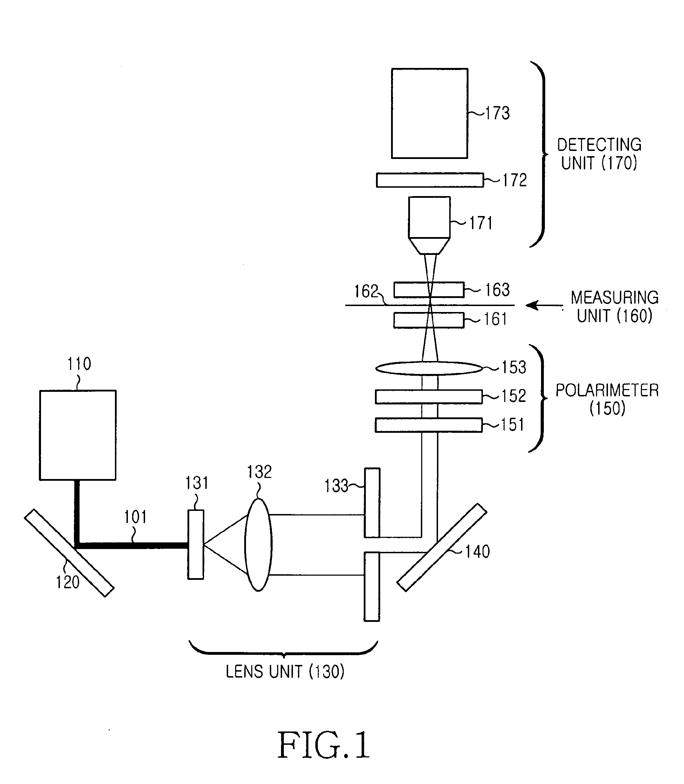

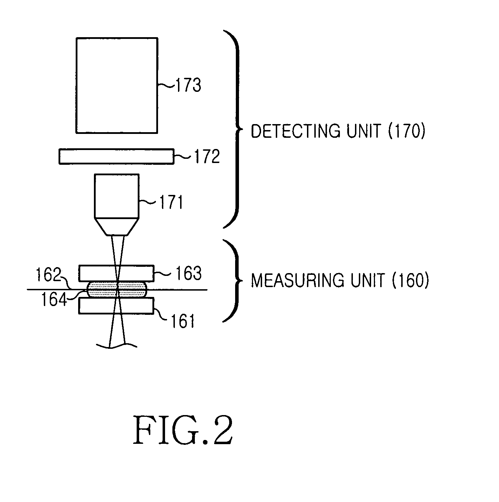

Fig. 1 is a block diagram showing a conventional apparatus for measuring residual stress in an optical fiber. Fig. 2 shows some additional features of a detecting unit and a measuring unit in Fig. 1. Referring to Figs. 1 and 2, the conventional apparatus for measuring residual stress in an optical fiber includes a light source 110 for emitting a beam 101. The beam 101 is used to measure the residual stress in an optical fiber 162. The conventional apparatus also includes a lens unit 130 for collimating the beam 101, a polarimeter 150, a measuring unit 160, a detecting unit 170 for detecting a phase shift of the beam 101 owing to residual stress, a first reflector 120 arranged between the light source 110 and the lens unit 130 and a second reflector 140 arranged between the lens unit 130 and the polarimeter 150.

The light source 110 emits the beam 101 for detecting residual stress to the optical fiber 162. The light source may include any laser having excellent coherency and polarization selectivity. The light source 110 is generally in the form of an He-Ne laser.

The lens unit 130 includes a diffuser 131 for diffusing the beam 101 emitted from the light source 110, a collimating lens 132 for collimating the beam diffused by the diffuser 131 and an opening 133 arranged in front of the collimating lens 132. The collimating lens 132 typically utilizes a convex lens.

The second reflector 140 is a device arranged between the lens unit 130 and the polarimeter 150 at a predetermined inclination for routing the beam 101 collimated by the lens unit 130 toward the polarimeter 150.

In practice, conventional residual stress measuring methods for optical fibers and optical fiber preforms based upon such photoelastic effect introduce a beam of light having a predetermined polarization component into a material subject for the measurement of its residual stress in order to detect variation of light.

The following are three representative documents about measurement of residual stress and other stress in optical fibers and optical fiber preforms based upon the photoelastic effect.

1. The first document is *"Measurement of Stress in Optical Fiber and Preform"* by P. L. Chu, T. Whotebread et al, published in Appl. Opt. 1982.21, PP 4241 to 4245, which is related to measurement of residual stress profiles about optical fibers and optical fiber preforms.

2. The second document is *"Fast Photoelastic Stress Determination Application to Monomode Fibers and Splices"* by Th. Rose, D. Spriedgel, J. R. Kropp et al, published in Sci. Technol. 4, PP 431 to 434 (1993)..

3. The third document is *"A Microscope for Measuring Axial Stress Profiles in Optical Fibers with High Spatial Resolution and Low Noise"* by K. W. Raine, published at "4th Optical Fiber Measurement Conference (NPL Teddington UK)" in 1997. The polarimeter 150 includes a polarizer 151 for linearly polarizing the beam 101 incident from the reflector 140 along a predetermined polarizing direction, a $\lambda/4$ plate 152 for converting the linear polarized beam into a circular polarized beam through phase shifting and a lens 153 for converging the circular polarized beam from the $\lambda/4$ plate 152 toward the optical fiber 162, which is arranged between slide glass 161 and cover glass 163 for measurement of residual stress thereof. The polarimeter 150 circularly polarizes the beam from the lens unit 151 through phase shifting and then introduces the circular polarized beam into the optical fiber 162 subject to measurement of its residual stress.

The measuring unit 160 includes the optical fiber 162 subject to measurement of residual stress, the slide glass 161 for supporting the optical fiber 162 and the cover glass 163 symmetrically opposed to the slide glass 161 about the optical fiber 162. Matching oil 164 is applied between the slide glass 161 and the cover glass 163, in particular, in a region into which the optical fiber 162 is inserted. The matching oil 164 has a refractivity similar to that of the optical fiber 162 to minimize any phase shift or measurement error of the beam past the measuring unit 160 owing to the refractivity difference between the optical fiber 162 and the glasses 161 and 163.

The cover glass 163 simply serves to fix the optical fiber 162. The cover glass 163 is preferably as thin as possible in order to minimize the refractivity difference between the cover glass 163 and the optical fiber and the phase shift of the beam propagating through the cover glass 163.

The detecting unit 170 detects any polarity variation in the beam incident from the measuring unit 160 to determine existence of residual stress in the optical fiber 162 and its intensity if any. The detecting unit 170 includes a high-magnification objective lens 171 for magnifying the beam incident from the measuring unit, an analyzer 172 for analyzing the beam transmitted from the optical fiber 162 to selectively pass a predetermined polarization component of the beam 101 and a CCD camera 173 for converting the beam 101 from the analyzer 172 into an electric signal and emitting the electric signal as a video signal.

However, the cover glass 163 disturbs the phase and path of the circular polarized beam past the optical fiber 162 thereby acting as an error factor in the above residual stress measuring process for optical fibers based upon the photoelastic effect.

Accordingly, there is a need in the art for improved methods of measuring residual stress in optical fibers and optical fiber preforms.

SUMMARY OF THE INVENTION

One object of the present invention to provide an apparatus for measuring residual stress in an optical fiber, which can prevent disturbance in the phase and path of light in use for measuring residual stress as well as more precisely detect conditions within optical fibers.

According to one aspect of the invention, an apparatus for measuring residual stress in an optical fiber includes a light source for emitting a beam used in measuring residual stress in an optical fiber, a polarimeter for polarizing the beam and converging the polarized beam to the optical fiber, a slide glass for supporting the optical fiber subject to residual stress measurement, an analyzer arranged in a position opposite to the slide glass for covering and supporting the optical fiber and for selectively passing a predetermined polarization component of the beam incident from the optical fiber, and a detecting unit for visualizing the beam transmitted from the analyzer.

Another embodiment of the present invention is directed to a measuring unit used in determining residual stress in an optical fiber. The measuring unit includes a slide glass arranged to support the optical fiber and an analyzer arranged in a position opposite to the slide glass to cover a portion of the optical fiber and arranged to selectively pass a predetermined polarization component of a beam incident from the optical fiber. The analyzer interrupts any polarization components that are shifted in phase owing to residual stress in the optical fiber.

BRIEF DESCRIPTION OF THE DRAWINGS

The above features and other advantages of the present invention will be more clearly understood from the following detailed description taken in conjunction with the accompanying drawings, in which:

Fig. 1     shows a conventional apparatus for measuring residual stress in an optical fiber;

Fig. 2     shows additional details of a detecting unit and a measuring unit in Fig. 1;

Fig. 3     shows an apparatus for measuring residual stress in an optical fiber in accordance with one embodiment of the present invention; and

Fig. 4     shows additional details of a detecting unit and a measuring unit in Fig. 3.

DETAILED DESCRIPTION OF THE PREFERRED EMBODIMENT

The following detailed description will present a preferred embodiment of the invention in reference to the accompanying drawings, in which well-known functions or constructions will not be described in detail since they may unnecessarily obscure the understanding of the invention.

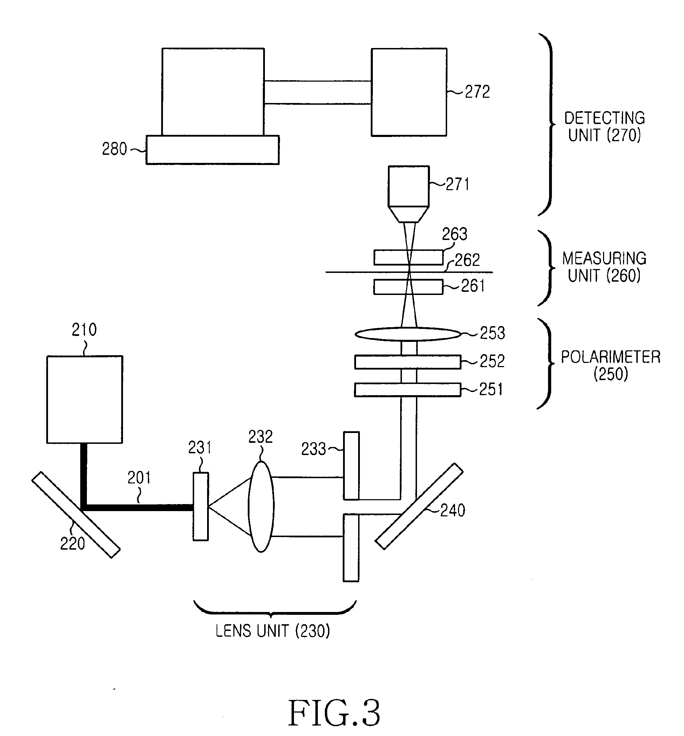

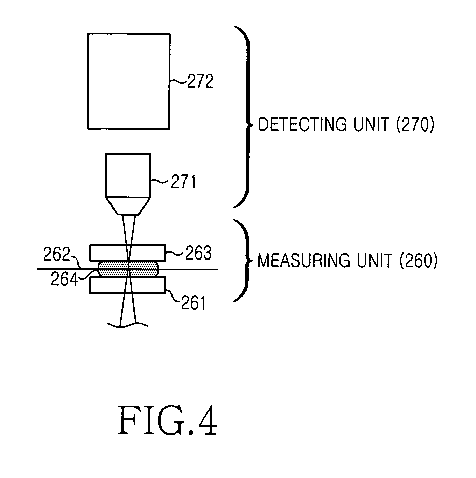

Fig. 3 shows an apparatus for measuring residual stress in an optical fiber according to a preferred embodiment of the present invention. Fig. 4 shows additional details of a detecting unit and a measuring unit in Fig. 3. Referring to Figs. 3 and 4, the apparatus for measuring residual stress in an optical fiber includes a light source 210 for emitting light or a beam 201, a lens unit 230, a polarimeter 250 for polarizing the beam 201 through phase shifting, a measuring unit 26 for measuring the phase shift of the beam 201, a photodetector unit 270, a first reflector 220 arranged between the light source 210 and the lens unit 230 and a second reflector 240 arranged between the lens unit 230 and the polarimeter 250.

The light source 210 outputs the beam 201 for use in detecting existence of residual stress in an optical fiber 262. The light source 210 may include a laser having what one of ordinary skill in the art would consider good or excellent coherency and polarization selectivity.

Preferably, the light source includes an He-Ne laser. The first reflector 220 introduces the beam 201 into the lens unit 230 and is positioned according by the light source 210.

The lens unit 230 includes a diffuser 231, a collimating lens 232 and an opening 233. The lens unit 230 serves to collimate the beam 201 incident from the light source 210.

The collimating lens 232 utilizes a convex lens, and is arranged side by side with the diffuser 231 to collimate the beam incident from the light source 210.

The second reflector 240 vertically shifts the path of the beam 201 collimated by the lens unit 230, and introduces the beam into the polarimeter 250. The second reflector 240 is arranged between the lens unit 230 and the polarimeter 250 at a predetermined angle of inclination.

In practice, residual stress in the optical fiber 262 is measured based upon the photoelastic effect. In this method, the beam 201 of light polarized to predetermined polarization components is introduced into the optical fiber 262 causing phase shift in polarized light owing to residual stress in the optical fiber 262. The intensity variation of polarized light owing to phase shift is detected in order to measure residual stress in the optical fiber 262.

When light polarized by a polarimeter propagates through an optical fiber, some of polarization components of light are irregularly shifted in their phases owing to residual stress in the optical fiber. An analyzer selectively passes predetermined polarization components of light past the optical fiber. After passing through the analyzer, the light intensity is compared to that before it was introduced into the analyzer to find variation. Then, the intensity of polarized light is measured to detect the degree of residual stress in the optical fiber.

The polarizer 250 includes a polarizer 251 for linearly polarizing the beam 201 incident from the second reflector 240 along a predetermined polarization direction, a $\lambda/4$ plate 252 converts the linear polarized beam into a circular polarized beam through phase shifting and a lens 253 converges a beam linearly polarized by the $\lambda/4$ plate 252 into the optical fiber 262 subject to measurement of its residual stress.

Accordingly, the polarizer 250 converts the collimated beam from the lens unit 230 into the circular polarized beam through phase shifting, and introduces the circular polarized beam into the optical fiber 262.

The polarizer 251 linearly polarizes the beam incident from the lens unit 230 into the beam along the predetermined polarization direction, and then introduces the linear polarized beam at a predetermined angle in respect to the $\lambda/4$ plate 252.

Equations 1 and 2 are time-space functions. Equation 1 expresses an x-axis component Ex of the polarization components in the beam, and Equation 2 expresses a y-axis component of the polarization components in the beam.

Equation 1

$$E_x - E_{x0}\sin(kz - \omega + \delta_1),$$

wherein Ex indicates the x-axis component of the polarization components in the beam, Ex0 indicates the amplitude of the Ex component, $\sin(kz - \omega + \delta_1)$ indicates the waveform of the Ex component propagating along a z-axis, kz means that the Ex component propagates along the z-axis with a wavenumber of k, $\omega$ indicates the angular frequency of the Ex component, and $\delta 1$ indicates an initial phase value of the Ex component.

Equation 2

$$E_y - E_{y0}\sin(kz - \omega + \delta_2),$$

wherein Ey indicates the y-axis component of the polarization components in the beam, Ey0 indicates the amplitude of the Ey component, $\sin(kz - \omega + \delta_2)$ indicates the waveform of the Ey component propagating along the z-axis, kz means that the Ey component propagates along the z-axis with a wavenumber of k, $\omega$ indicates the angular frequency of the Ey component, and $\delta 1$ indicates an initial phase value of the Ey component.

Equation 1 expresses the Ex component, i.e., the x-axis component of the beam in use for measuring residual stress in the optical fiber, and Equation 2 expresses the Ey component, i.e., the y-axis component of the beam.

In this regard, the polarizer 251 linearly polarizes the polarization components of the beam incident from the lens unit 230 along the predetermined polarization direction, and introduces the linear polarized beam into the $\lambda/4$ plate 252 at an angle of about 45 deg.

The $\lambda/4$ plate 252 is preferably made of birefractive crystal such as calcite or mica. Such birefractive materials have two different refractive indices and thus serve to divide light or a beam into polarization components propagating at different velocities. In this regard, calcite divides light incident thereto into ordinary rays, which follow the refraction law, and extraordinary rays, which do not follow the refraction law. Such phenomenon is referred to as birefraction, which results from different refractive indices within a medium. Therefore, light propagating through a birefractive medium has different propagating paths and velocities owing to the different refractive indices. For example, the ordinary ray may propagate at a velocity higher than that of the extraordinary ray in a positive crystal such as quartz, and on the other hand, the ordinary ray may propagate at a velocity lower than that of the extraordinary ray in a negative crystal such as calcite. Accordingly, light propagating through the birefractive medium has a difference in phase and velocity between polarization components owing to the different refractive indices of the birefractive medium.

The measuring unit 260 includes a slide glass 261 and an analyzer 263 arranged in a position opposite to the slide glass 261 and for covering the optical fiber 262. The optical fiber 262 is inserted between the slide glass 261 and the analyzer 263. Matching oil 264 having a refractive index similar to that of the optical fiber 262 may be applied around the optical fiber 262 in order to minimize phase shift and measurement error of the circular polarized beam owing to different refractive indices of the elements of the measuring unit 260.

The optical fiber 262 is placed on the slide glass 261. The slide glass 261 has a refractive index similar to that of the optical fiber 262 and is formed as thin as possible in order to minimize any phase shift and path variation of circular polarized light during its propagation through the slide glass 261.

The analyzer 263 interrupts any polarization components that are shifted in their phases owing to residual stress in the optical fiber 262. The analyzer 263 covers the optical fiber 262 in a position opposite to the slide glass 261, and also functions as a cover glass for supporting the optical fiber 262.

The detecting unit 270 visualizes the beam incident from the analyzer 263, and includes an objective lens 271 for focusing the beam from the analyzer 263 into an image and a CCD camera 272 for visualizing the image focused by the objective lens 271.

The control unit 280 monitors conditions of the optical fiber 262 based upon the visualized beam or image from the detecting unit 270.

As set forth in the embodiments described above, the measurement apparatus according to the present invention used the analyzer as the conventional cover glass to minimize phase shift and path variation of polarization components of a beam of light in use for measuring residual stress in an optical fiber. This provides the advantage of minimizing error factors occurring in measurement of residual stress. Further, the objective lens can be placed adjacent to the optical fiber subject to measurement and have a high magnification. In this regard, since the analyzer is placed close to the optical fiber, there are some advantages in that errors can be minimized in residual stress measurement owing to reduced phase difference as well as magnification of the objective lens can be improved. As a result, an image visualized by the detecting unit can be easily magnified.

**Claims**

1. An apparatus for measuring residual stress in an optical fiber, the apparatus comprising:

   a light source arranged to emit a beam used in measuring the residual stress in the optical fiber;

   a polarimeter arranged to polarize the beam and converge the polarized beam to the optical fiber;
   a slide glass arranged to support the optical fiber;
   an analyzer arranged in a position opposite to the slide glass for covering and supporting the optical fiber and for selectively passing a predetermined polarization component of the beam incident from the optical fiber; and
   a detecting unit for visualizing the beam transmitted from the analyzer.

2. An apparatus as set forth in claim 1, further comprising:

   a lens unit collimating the beam measured by the light source before introducing the beam into the polarimeter;
   a control unit arranged to monitor conditions of the optical fiber based upon the beam visualized by the detecting unit; and
   a reflector inclined at a predetermined angle between the lens unit and the polarimeter and arranged to shift the path of the beam collimated by the lens unit.

3. An apparatus as set forth in claim 1, further comprising matching oil applied between the analyzer and the slide glass which are opposed to each other about the optical fiber.

4. An apparatus as set forth in claim 1, wherein the detecting unit includes:

   an objective lens for focusing the beam past the analyzer; and
   a CCD camera for visualizing the beam focused by the objective lens.

5. An apparatus as set forth in claim 1, wherein the polarimeter includes a plate that converts a linear polarized beam into a circular polarized beam and the plate includes a birefractive crystal.

6. A measuring unit used in determining residual stress in an optical fiber, the measuring unit comprising:

   a slide glass arranged to support the optical fiber; and
   an analyzer arranged in a position opposite to the slide glass to cover a portion of the optical fiber and arranged to selectively pass a predetermined polarization component of a beam incident from the optical fiber.

7. An apparatus as set forth in claim 6, wherein the analyzer interrupts any polarization components that are shifted in phase owing to residual stress in the optical fiber.

FIG.1

~173

~172

~171

DETECTING UNIT (170)

162~
164~
~163
~161

MEASURING UNIT (160)

# FIG.2

FIG.3

FIG.4